# EUROPEAN PATENT APPLICATION

(11) **EP 1 575 120 A1**
(43) Date of publication of application: **14.09.2005**
(21) Application number: 05251490.8
(22) Date of filing: 11.03.2005
(51) Int. Cl.: H01Q 1/12

(54) **Vehicle windshield having antenna**

(30) Priority: 12.03.2004 JP 2004070566
(71) Applicant: Nippon Sheet Glass Company, Limited, Tokyo (JP)
(72) Inventor: Ryokichi Doi c/o Nippon Sheet Glass Comp., Limited, Tokyo (JP); Hitoshi Kakizawa c/o Nippon Sheet Glass Comp., Ltd, Minato-Ku Tokyo (JP)
(74) Representative: Wilson Gunn

(57) **Abstract**

A vehicle windshield (10) having an antenna is provided. The windshield comprises a front portion (12) including a region for securing a field of view for a driver of a vehicle, and two side portions (14a,14b) each extending along the side of the vehicle bending from the side of the front portion. The side portions are integrally formed with the front portion, respectively. At least one antenna element (16a,16b,18a,18b) is provided at a bent portion in a boundary between the front portion and each of the side portions.

## Description

### BACKGROUND OF THE INVENTION

### 1. Field of the Invention

The present invention relates to a vehicle windshield having an antenna, particularly to a windshield having an antenna and securing a field of view toward a forward direction and forward/side direction.

### 2. Description of the Related Art

A glass antenna has been conventionally developed, which comprises an antenna element on a windshield (a front glass) of a vehicle for receiving electric waves for a medium frequency (AM), very high frequency (FM/TV), and ultra high frequency (TV).

In Japanese patent publication No. 09-130124, there is disclosed a vehicle antenna structure which comprises a convex-shaped antenna element on a windshield for receiving a TV wave.

Also, in Japanese patent publication No. 2001-211021, there is disclosed a vehicle antenna structure for receiving an FM wave and AM wave, the structure comprising a loop-shaped antenna element provided near to an upper edge of the windshield, and an antenna element connected to a lower side of the loop-shaped antenna element and extended perpendicularly toward a lower edge of the windshield.
It is further disclosed that the loop-shaped antenna element and the antenna element extended perpendicularly are formed by a silver paste including black carbon particles.

However, in the method disclosed in Japanese patent publication No. 09-130124, the size and shape of a suitable antenna element as a general characteristic of an antenna element are largely varied depending on a wavelength (a frequency band) of an electric wave to be received, so that at least the size of an antenna element is required to be substantially large. In this case, a problem is caused such that the field of view toward a forward direction from the inside of a vehicle is not secured and the visibility of a windshield is disturbed.

Also, in the methods disclosed in both Japanese patent publications described above, a problem is caused such that the width of an antenna element is required to be thin in order to secure a field of view toward a forward direction from the inside of a vehicle, resulting the decrease of a receiving sensitivity of an antenna.
A problem is also caused such that the beauty of a vehicle is required because an antenna element is remarkable when a vehicle is viewed from the outside of a vehicle.

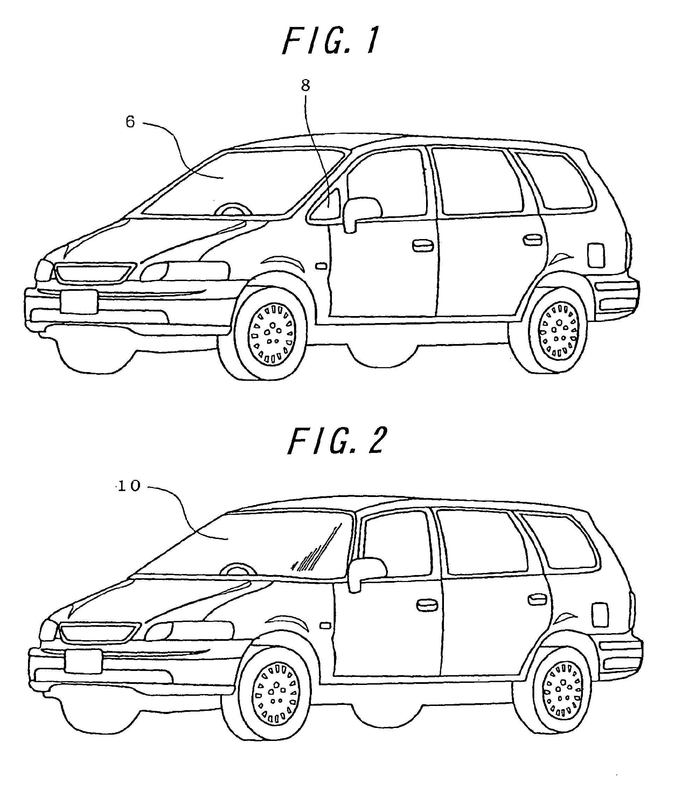

A windshield has recently provided, which secure not only a field of view toward a forward direction from the inside of a vehicle but also a field of view toward a forward/side direction from the inside of a vehicle. The word "forward/side direction" is used herein to include an oblique direction and side direction. This windshield has a structure in which a front glass 6 and a triangular front bench glasses 8 each provided on a forward portion of each of front doors on both sides of a conventional vehicle shown in Fig. 1 are integrally joined.

Fig. 2 shows a windshield of this type, which is designated by reference numerals 10 in the figure. There is no metal pillar in the windshield of this type, the metal pillar which is a part of a vehicle body being existed in a conventional windshield, so that a field of view toward a forward direction and a forward/side direction is secured for a driver.

### SUMMARY OF THE INVENTION

An object of the present invention is to provide an antenna to a windshield of this type in order to dissolve the problems of a glass antenna described above.

A vehicle windshield having an antenna in accordance with the present invention comprises a front portion including a region for securing a field of view for a driver of a vehicle; two side portions each extending along the side of the vehicle bending from the side of the front portion, the side portions being integrally formed with the front portion, respectively; and at least one antenna element is provided at a bent portion in a boundary between the front portion and each of the side portions.

It is noted that "the region for securing a field of view for a driver" means herein, for example in Japan, a test region A defined in Japanese Industrial Standard JISR3211 : 1998, 4.11 (Seeing through distortion) and 4.13 (Double image) in a safety glass for vehicle, and in Europe the test region A defined in Uniform provisions concerning the approval of safety glazing and glazing material, ECE R-43 Annex 3, 9.2 (Seeing through distortion test) and 9.3 (Double image test).

It is also noted that "a bent portion" means herein a cured portion which is curved from gradually to sharply.

In accordance with the present invention, it is preferable that the at least one antenna element is selected from the group consisting of an AM antenna element, an FM antenna element, and a TV antenna element. It is also preferable that at least one antenna element is provided at each of two bent portions to implement a diversity reception.

Alternatively, a shielding film may be provided at the bent portion in the boundary for covering the at least one antenna element.

According to the vehicle windshield having an antenna of the present invention, the following advantageous effects may be obtained.
(1) An antenna element is provided at a bent portion in a boundary between the front portion and side portion of the windshield, the bent portion being outside the region for securing a field of view for a driver, so that the field of a view for a driver is not disturbed. Also, a high receiving sensitivity may be realized because it is unnecessary that the width of an antenna element is caused to be thin.
(2) An antenna element is not remarkable because it is provided at a bent portion of the windshield. In the case that a shielding film is provided, the beauty of the windshield is obtained because an antenna element is hidden by the shielding film.
(3) The area of the region for securing a field of view for a driver is large, so that a plurality of antenna elements may be provided, which is led to a good diversity reception.

### BRIEF DESCRIPTION OF THE DRAWINGS

Fig. 1 is a schematic view of a conventional windshield.
Fig. 2 is a schematic view of a windshield to which the present invention is applied.
Fig. 3 is a schematic view of an embodiment according to the present invention.
Fig. 4 is a schematic view of another embodiment according to the present invention.

### DETAILED DESCRIPTION OF THE PREFERRED EMBODIMENT

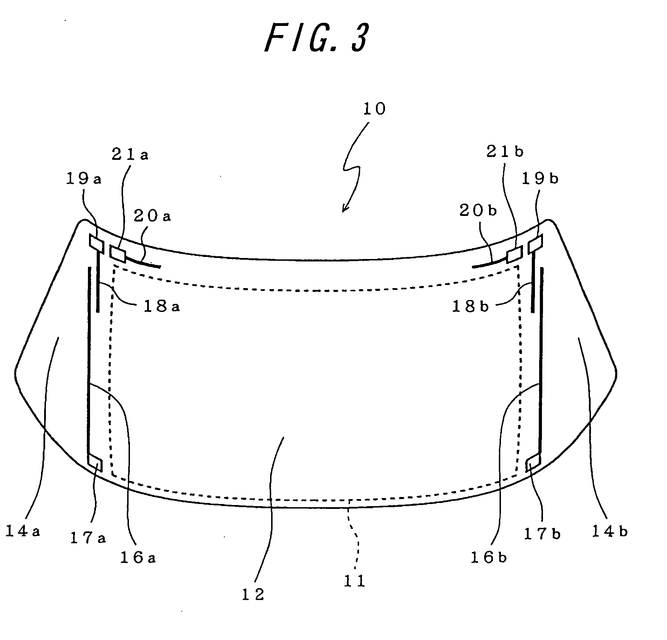

Fig. 3 shows an embodiment of a windshield having an antenna in accordance with the present invention. A windshield 10 comprises integrally a front portion 12 including a region securing a field of view for a driver and side portions 14a and 14b each extended to the side of the front portion. Boundary portions between the front portion 12 and the side portions 14a, 14b are curved, respectively.
The side portions 14a and 14b are formed so as to be extended along the sides of a vehicle (not shown), respectively.

The windshield is a laminated glass consisting of two or more glass sheets adhered to each other by a thermoplastic resin film. An antenna element is formed by a printed line on an inner surface (a surface inside a vehicle) of the curved boundary portion of the windshield 10. A printed line is formed on a planar glass sheet before bending by printing a conductive paste such as an Ag-included paste, for example, using an existed printing technique such as a screen printing, and by baking the paste during the glass sheet is heated and bent.

In the example shown in Fig. 3, the same antenna elements are provided on the curved boundary portions on both sides, respectively, for a diversity reception. These antenna elements are FM antenna elements 16a, 16b and TV antenna elements 18a, 18b, 20a, 20b.

Each antenna element is a straight line element extended along the curved portion of a glass sheet, and the length of each antenna element is selected so that a good receiving sensitivity is obtained. Assuming the center wavelength of received electrical wave is λ, the length L of an antenna element is given by; L = (1/4) × λ × (a wavelength shortening factor). The wavelength shortening factor herein relates to a propagation speed of an electric wave propagating on a dielectric substrate (a glass sheet in this embodiment), and is a ratio of a size of antenna formed on the dielectric substrate so that an antenna is resonated with respect to an antenna size assumed for the case where there is no dielectric substrate.
As an example, when λ is 4 meters (76 MHz), the length L of an FM antenna is (1/4) × 4 × 0.65 ≅ 0.65 meters.

Each antenna element is connected to a feeding point, respectively. That is, FM antenna elements 16a and 16b are connected to the feeding points 17a and 17b, TV antenna elements 18a and 18b to the feeding points 19a and 19b, and TV antenna elements 20a and 20b to the feeding points 21a and 21b. These feeding points are preferably arranged near to the vehicle body, because the length of a wiring to a feeding point becomes short, which is preferred for a performance of the antenna.

The printed lines and feeding points are provided outside the region 11 for securing a field of view for a driver. As the area outside the region 11 is large, the freedom for the design of an antenna element becomes large. It is therefore possible that the number of antenna elements is increased, or the line width of an antenna element is thick, by which the receiving sensitivity may be improved.

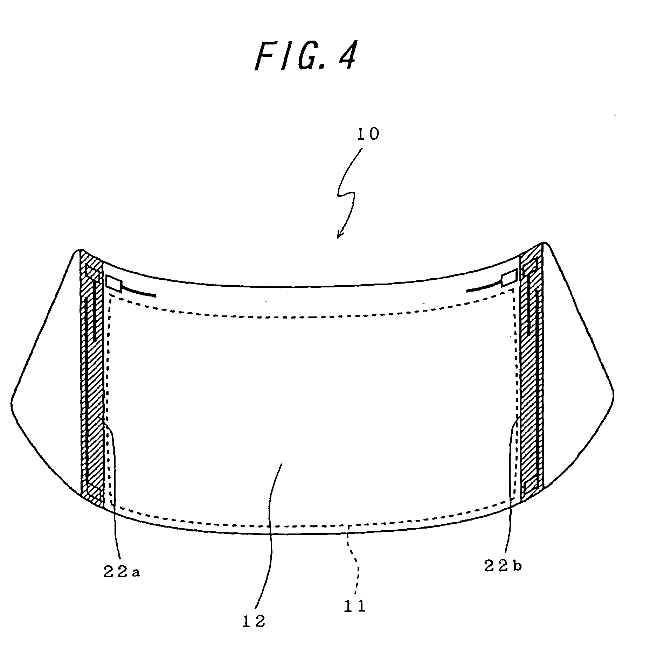

In the case that the beauty of a windshield is injured by antenna elements, it is preferable that the antenna elements 16a, 16b, 18a and 18b may be hidden by the shielding films 22a and 22b which are provided on the inner surface (a surface inside a vehicle) of the windshield as shown in Fig. 4. In this manner, the antenna elements are not viewed from the outside of a vehicle.

A black shielding film may be utilized as the shielding films 22a and 22b, which is conventionally provided on the peripheral portion of a windshield. For that purpose, the black shielding film is formed on the inner surface of a windshield by printing a paste including a black pigment by means of a conventional screen printing and drying it. Then, a printed line is formed by printing a conductive paste and baking it when the glass sheet is heated to be bent.

In the embodiment described above, while a printed line is formed on the inner surface of a windshield, it is preferable that a printed line is provided in a laminated glass in view of the resistance for injury and the receiving sensitivity. In this case, a printed line is formed on the surface of a glass sheet to which a thermoplastic resin film is adhered.

When an antenna element is formed in a laminated glass, a wire line may be used other than a printed line. For that purpose, a wire line is formed on the surface of the thermoplastic resin film or at a predetermined portion in the film. This is implemented, for example, by pressing a heated wire line to the thermoplastic resin film to melt it partly and by fixing the wire line to the film, or by adhering the wire line to the film by means of adhesion. Glass sheets are laminated through the thermoplastic resin film to which a wire line is attached.

When an antenna element is provided in a laminated glass, it is preferable that a shielding film is provided in the laminated glass and/or on the inner surface of the laminated glass (the surface inside a vehicle) so that the antenna elements are not viewed from the inside and/or outside of a vehicle.

Also, in the case that the shielding film is to be provided in the laminated glass, the shielding film may be provided on the surface of a thermoplastic resin film or therein other than on the surface of a glass sheet to which the thermoplastic resin film is adhered.

The fabrication of an antenna element is not limited to the embodiment described above. A resin film, on the surface thereof an antenna element is formed, may be adhered to the inner surface of a windshield by means of adhesion.

While the antenna element has a straight line shape across the bent portion of a windshield in view of unremarkable appearance in the embodiment described above, the shape of the antenna element is not limited so long as the antenna element may receive an electric wave. Also, an AM antenna element may be formed in addition to an FM and TV antenna.

While a glass sheet is used for a windshield in the embodiment described above, the structure of a plurality of resin sheet laminated together may be used. Also, the structure of a glass sheet and resin sheet laminated together may be utilized. Alternatively, one glass sheet or one resin sheet may be used.

## Claims

1. A vehicle windshield having an antenna comprising:
a front portion including a region for securing a field of view for a driver of a vehicle;
two side portions each extending along the side of the vehicle bending from the side of the front portion, the side portions being integrally formed with the front portion, respectively; and
at least one antenna element is provided at a bent portion in a boundary between the front portion and each of the side portions.

2. The vehicle windshield having an antenna according to claim 1, wherein the at least one antenna element is provided at each of two bent portions to implement a diversity reception.

3. The vehicle windshield having an antenna according to claim 1, wherein
the windshield is composed of a laminated structure consisting of two or more glass sheets and/or resin sheets laminated by a thermoplastic resin film, and
the antenna element is formed on the surface of the windshield faced to the inside of the vehicle.

4. The vehicle windshield having an antenna according to claim 1, wherein
the windshield is composed of a laminated structure consisting of two or more glass sheets and/or resin sheets laminated by a thermoplastic resin film, and
the antenna element is formed on the surface of the glass sheet or resin sheet contacted with the thermoplastic resin film, or in the thermoplastic resin film.

5. The vehicle windshield having an antenna according to claim 1 further comprising a shielding film provided at the bent portion in the boundary for covering the at least one antenna element.

6. The vehicle windshield having an antenna according to claim 1, wherein the antenna element consists of a printed line or wire line.

7. The vehicle windshield having an antenna according to any one of claims 1-6, wherein the at least one antenna element is selected from the group consisting of an AM antenna element, an FM antenna element, and a TV antenna element.
